# FASCICULE DE BREVET EUROPEEN

(11) **EP 2 824 621 B1**
(45) Date de publication et mention de la délivrance du brevet: **07.10.2020**
(21) Numéro de dépôt: 14176230.2
(22) Date de dépôt: 09.07.2014
(51) Int. Cl.: G06Q 20/00, G07G 1/12, G07G 1/00, B65D 55/06, H05K 5/00

(54) **Terminal de paiement électronique**
Elektronisches Zahlungsterminal
Electronic payment terminal

(30) Priorité: 12.07.2013 FR 1356872
(43) Date de publication de la demande: 14.01.2015
(73) Titulaire: Ingenico Group, 75015 Paris (FR)
(72) Inventeur: Janot, Cyril, 26400 Grane (FR); Andre, Jérôme, 26800 Montoison (FR); Allirot, Richard, 38700 Corenc (FR); Granddidier, Yann, 07610 Lemps (FR); Chovin, Gauthier, 26400 Allex (FR)
(74) Mandataire: Vidon Brevets & Stratégie

(56) Documents cités:
- WO-A1-93/06564
- WO-A1-98/10368
- WO-A2-2010/128442
- CN-U- 202 205 287
- US-A1- 2003 132 918

## Description

### 1. Domaine de l'invention

Le domaine de l'invention est celui des terminaux de paiement. La présente invention se rapporte au domaine des terminaux de paiement électroniques. Plus particulièrement, la présente invention se rapporte à un nouveau type de dispositif de paiement électronique qui peut être utilisé à d'autres fins que les opérations de règlement des achats.

### 2. Art antérieur

A l'heure actuelle, les terminaux de paiement sont majoritairement utilisés pour permettre le règlement des achats de biens et de services au sein des points de vente. Ces terminaux comprennent généralement un lecteur de carte à puce et un lecteur de carte magnétique. Ils comprennent également un écran, permettant notamment de visualiser des informations, telles que les montants des transactions, et un clavier de saisie de ces mêmes montants ainsi que des codes confidentiels saisis par les clients, ou bien un écran tactile.

Les terminaux les plus récents sont connectés à des caisses enregistreuses et/ou à des ordinateurs par l'intermédiaire d'un réseau de communication. De telles connexions peuvent être filaires, par exemple de type Ethernet, ou sans fil. Ces connexions permettent par exemple de se connecter à un serveur d'authentification ou à un serveur bancaire en vue de l'obtention d'une autorisation de débit. Des exemples de tels terminaux peuvent être trouvés dans les brevets CN202205287U et WO2010/128442A2.

En revanche, les terminaux de paiement ne permettent pas de prendre en charge des opérations autres que celle de règlement des achats. Par exemple, lorsqu'il est connecté à une caisse enregistreuse, le terminal de paiement transmet les données de l'opération effectuée à la caisse enregistreuse (lorsqu'il s'agit d'une caisse enregistreuse intelligente). Cette caisse enregistreuse journalise les transactions de paiement (qu'il s'agisse de transactions faites à l'aide du terminal de paiement, de transactions par chèque ou encore de transaction en monnaie fiduciaire). Il arrive cependant qu'une telle caisse enregistreuse ne fonctionne pas ou mal. Ceci n'a heureusement pas pour conséquence de bloquer le paiement effectué sur le terminal de paiement. En revanche la journalisation des paiements peut être erronée, ce qui peut poser problème, par exemple aux autorités en charge du recouvrement des créances fiscales. Par ailleurs des commerçants peu scrupuleux peuvent rendre les caisses enregistreuses inopérantes dans le seul but de frauder les administrations fiscales. Ceci peut par exemple être le cas dans les pays où la pression fiscale est moins facilement admise.

Dans d'autres contextes, le terminal de paiement n'est pas relié (physiquement ou par réseau) à une caisse enregistreuse. Dans ce cas, le fonctionnement de la caisse enregistreuse est indépendant de celui du terminal de paiement. Il n'est donc pas possible de faire le lien entre le journal de vente de la caisse enregistreuse et les transactions réalisées par le terminal. Pour pallier ce problème, des terminaux de paiement ont été développés afin de remplir à la fois des fonctions de terminaux de paiement et des fonctions de caisse enregistreuse. Cependant, de tels terminaux de paiement présentent des problèmes liés à la gestion de la mémoire fiscale, c'est-à-dire de la mémoire permettant l'enregistrement des données nécessaires aux contrôles fiscaux.

Il existe donc un besoin de fournir des solutions permettant d'éviter ce type de fraude.

### 3. Exposé de l'invention

L'invention ne présente pas certains des inconvénients de l'art antérieur.

L'invention se rapporte plus particulièrement à un terminal de paiement électronique, dont le boîtier comprend deux demi-coques, une demi-demi-coque supérieure et une demi-coque inférieure dans laquelle est aménagé un logement pouvant être obstrué par l'intermédiaire d'une trappe.

L'invention est définie par les revendications.

Ainsi, selon l'invention, le terminal comprend un module de mémorisation transactionnel, permettant de garder la trace des transactions effectuées depuis le terminal, par exemple dans un but de comptabilisation des montants des transactions.

De ce fait le terminal de paiement intègre des fonctions de caisse enregistreuse. Selon l'invention, le module de mémorisation transactionnel est extractible. Ainsi, il est possible, lorsque le module de mémorisation transactionnel est plein, de le remplacer par un autre module de mémorisation transactionnel vierge. Par ailleurs, il est possible de consulter les opérations contenues dans ce module de mémorisation transactionnel à l'aide d'un autre dispositif que le terminal de l'utilisateur.

Selon l'invention, le module de mémorisation transactionnel est extractible. Aussi, il est possible, lorsque le module de mémorisation transactionnel est plein, de le remplacer par un autre module de mémorisation transactionnel vierge. Par ailleurs, il est également possible de consulter le contenu de ce module de mémorisation transactionnel à l'aide d'un autre dispositif que le terminal de l'utilisateur.

On qualifiera, dans la présente demande, de « moyen de maintien élastique » tout moyen de maintien présentant une élasticité suffisante pour permettre l'exercice d'une force de pression suffisante pour pousser le module de mémorisation transactionnel vers le connecteur, de façon à maintenir la connexion entre la plage de connexion dudit module de mémorisation transactionnel et le connecteur.

Ainsi l'invention permet de limiter les déplacements du module de mémorisation transactionnel dans le terminal lors de manipulations du terminal,. En effet, de telles manipulations seraient susceptibles de détériorer le module de mémorisation transactionnel du fait de chocs ou des tensions imposées au module, et notamment à son circuit imprimé, en particulier lorsque le circuit imprimé est un circuit imprimé non déformable, ou de provoquer des pertes de connexion entre le connecteur et ledit module de mémorisation transactionnel.

Selon une caractéristique particulière de l'invention, ledit connecteur est conformé de sorte que ledit module de mémorisation transactionnel amovible se situe dans un plan sensiblement parallèle à une surface de la demi-coque inférieure.

Selon une caractéristique particulière de l'invention, au moins une partie dudit connecteur est positionnée de sorte qu'une portion non connectable dudit module de mémorisation transactionnel amovible soit sensiblement en vis-à-vis de ladite trappe, lorsque ledit module de mémorisation transactionnel amovible est retenu dans ladite position de fonctionnement.

Un tel mode de réalisation permet de faciliter l'accès audit module de mémorisation transactionnel, par exemple pour la lecture d'une indication relative à son numéro de série, et/ou sa capacité mémoire.

Selon une caractéristique particulière de l'invention, ladite plage de connexion dudit module de mémorisation transactionnel amovible et/ou ledit connecteur comprennent des moyens de connexion selon un format standard.

Un tel mode de réalisation offre l'avantage de permettre une lecture des informations représentatives contenues dans le module de mémorisation transactionnel depuis n'importe quel autre dispositif du marché, compatible avec ledit format.

Selon une caractéristique particulière de l'invention, ledit terminal comprend en outre des ergots périphériques, formant des moyens de limitation d'un déplacement latéral du module de mémorisation transactionnel amovible, lorsque ledit module de mémorisation transactionnel amovible est retenu dans ladite position de fonctionnement, selon au moins une direction latérale de déplacement.

Selon une caractéristique particulière de l'invention, les ergots périphériques sont situés dans ledit logement, à la périphérie de ladite position de fonctionnement.

Un tel mode de réalisation offre l'avantage de permettre de vérifier facilement, de façon visuelle, le positionnement du module par rapport aux ergots périphériques, de façon par exemple à éviter de heurter les ergots lors du positionnement du module de mémorisation transactionnel, et donc d'altérer le module de mémorisation transactionnel et/ou lesdits ergots.

Selon une caractéristique particulière de l'invention, ledit terminal comprend des moyens de vérification de la présence dudit module de mémorisation transactionnel amovible, délivrant une information de présence.

Ainsi l'invention permet d'avertir l'utilisateur, ou un tiers, par exemple une tiers habilité à effectuer des contrôles de nature comptable ou fiscale, lorsque le terminal est utilisé sans module transactionnel.

Selon une caractéristique particulière de l'invention, le terminal comprend en outre des moyens d'authentification dudit module de mémorisation transactionnel amovible, délivrant une information d'authentification.

Lesdits moyens d'authentification peuvent notamment mettre en œuvre des moyens de lecture d'au moins une donnée contenue par ledit module de mémorisation transactionnel amovible et des moyens de comparaison de ladite donnée par rapport à une donnée attendue, délivrant une décision d'authentification du module.

Ainsi, l'invention peut permettre de s'assurer que le module de mémorisation transactionnel installé sur le terminal utilisé est bien un module authentique, par exemple parce que son numéro de série est un numéro de série connu ou vérifiable par le terminal, éventuellement grâce à des moyens de contrôle à distance, par exemple par connexion à un serveur d'authentification distant.

Les moyens d'authentification du terminal peuvent également mettre en œuvre des moyens de décryptage d'au moins une donnée contenue par ledit module, par exemple grâce à un mécanisme de décryptage asymétrique par clés publique et privée (la clé publique étant par exemple connue du module et du terminal et la clé privée étant connue uniquement du terminal).

Selon une caractéristique particulière de l'invention, ledit terminal comprend des moyens de blocage, au moins partiel, du fonctionnement dudit terminal en cas d'information de présence et/ou d'authentification négative.

Ainsi l'invention permet de n'autoriser le fonctionnement du terminal que lorsque le module de mémorisation transactionnel est présent. De ce fait, toutes les transactions effectuées depuis le terminal seront nécessairement enregistrées par le module. Ainsi, l'invention permet de s'assurer de la complétude des informations contenues dans le module, notamment lorsqu'elles sont utilisées à des fins comptables.

Selon un mode de réalisation particulier de l'invention, ledit module de mémorisation transactionnel amovible comprend des moyens d'enregistrement d'au moins une information représentative d'au moins une transaction réalisée à l'aide dudit terminal, ladite information représentative comprenant au moins un montant de transaction et au moins une donnée représentative d'une taxe à appliquer à ladite transaction
et ledit module de mémorisation transactionnel comprend des moyens de protection de ladite information représentative, aptes à empêcher un effacement et/ou une modification des données mémorisées par ledit module de mémorisation transactionnel amovible.

L'information représentative mémorisée peut également inclure par exemple la date, l'heure de la transaction, et/ou une identification du moyen de paiement utilisé.

Ainsi, selon l'invention, le module de mémorisation transactionnel permet de garder la trace d'une transaction effectuée depuis le terminal, et de calculer une taxe associée à une transaction, par exemple dans un but de comptabilisation des montants des transactions et/ou de calcul de taxes à reverser à un organisme habilité.

Les moyens de protection permettent notamment de s'assurer de l'absence de corruption des données mémorisées par ledit module de mémorisation transactionnel, notamment de l'impossibilité pour un fraudeur, de supprimer les informations représentatives associées à certaines transactions ou à les modifier (par exemple en minorant le montant mémorisé relatif à un transaction). De tels moyens peuvent notamment être mis en œuvre grâce à un microprocesseur que comprend le module de mémorisation transactionnel ou par l'utilisation d'un type de mémoire particulier, par exemple une mémoire de type PROM (pour « Programmable Read Only Memory"), ou FPROM (pour "Field Programmable Read Only Memory") ou OTP (pour « One Time Programmable »), qui ne permet qu'une seule écriture en mémoire de données.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 présente une vue de profil d'un terminal de paiement selon l'invention ;
- les figures 2a et 2b présentent les deux faces d'un module de mémorisation transactionnel apte à équiper un terminal de paiement selon l'invention ;
- les figures 3a, 3b et 3c présentent chacune une vue détaillée d'un logement de la coque inférieure destiné à accueillir un module de mémorisation transactionnel amovible, dans des moments différents de l'installation d'un module de mémorisation transactionnel amovible, celui étant présenté respectivement :
   - en figure 3a, avant son insertion dans une position de fonctionnement, les moyens de maintien élastique étant inactifs ;
   - en figure 3b, après son insertion dans la position de fonctionnement illustrée en figure 3a, les moyens de maintien élastique étant inactifs ;
   - en figure 3c, inséré dans la position de fonctionnement illustrée en figures 3a et 3b, les moyens de maintien élastique étant actifs.

### 5. Description d'un mode de réalisation de l'invention

### 5.1 Principe général

Le principe général de l'invention repose sur la mise en œuvre dans un terminal de paiement de moyens d'enregistrement des transactions effectuées depuis ce terminal, dans un module dédié, dit module de mémorisation transactionnel, de façon à inclure dans le terminal des fonctionnalités de caisse enregistreuse, et notamment des fonctionnalités de journalisation des transactions effectuées depuis ce terminal.

Ainsi, l'invention permet en particulier de fiabiliser la journalisation des paiements effectués. En effet, grâce à l'invention, une transaction effectuée depuis le terminal est mémorisée dans le module de mémorisation transactionnel, et donc prise en compte dans le journal des ventes du terminal. Plus particulièrement, le module de mémorisation transactionnel de l'invention est sécurisé. En effet, plutôt que de se présenter sous la forme d'une carte mémoire standard dans laquelle la journalisation est effectuée, le module de mémorisation transactionnel est sécurisé à l'aide d'un processeur indépendant, empêchant que les données qui y sont inscrites soient effacées, ce qui ne peut pas être mis en œuvre avec une carte mémoire standard (telle qu'une carte SD, MicroSD, etc.).

Selon l'invention, le module de mémorisation transactionnel du terminal est extractible, de façon à pouvoir permettre l'exploitation des informations mémorisées dans le module de mémorisation transactionnel depuis un autre terminal (et plus particulièrement un terminal selon l'invention), notamment à des fins de vérifications comptables (par exemple afin de calculer un montant cumulé de transactions ou pour vérifier que les informations mémorisées par une caisse enregistreuse comprennent bien toutes les transactions effectuées depuis le terminal de paiement).

De plus, lorsque le module de mémorisation transactionnel est utilisé comme référence comptable, l'invention supprime en particulier les risques d'écart entre le montant des transactions effectivement réalisées depuis le terminal et la journalisation comptable des ventes réalisées depuis le terminal, liés par exemple à des problèmes de communication entre le terminal et une caisse enregistreuse, ou à un dysfonctionnement d'une caisse enregistreuse, qui empêcherait la mémorisation d'une transaction du terminal.

Le module de mémorisation transactionnel et/ou le terminal dans lequel il est inséré comprennent également des moyens d'identification de la présence du module de mémorisation dans le terminal. Ces moyens d'identification de présence peuvent obtenir une donnée représentative d'une présence à partir du connecteur dans lequel le module de mémorisation transactionnel est inséré (par exemple en vérifiant la connexion de chacune des pistes de la plage de connexion du module de mémorisation transactionnel). Le module de mémorisation transactionnel et/ou le terminal dans lequel il est inséré comprennent également des moyens d'authentification du module de mémorisation, assurant que le module inséré n'est pas un module « piraté ». Ces moyens peuvent prendre la forme d'un processeur ou d'un composant d'authentification. En cas d'impossibilité de détection et/ou d'authentification, le terminal comprend des moyens de blocage de l'utilisation du terminal, par exemple sous la forme d'un circuit de coupure ou de sécurisation qui empêche le démarrage du terminal. Ainsi, le module de mémorisation enregistre des informations représentatives des transactions réalisées à l'aide terminal, ces informations représentatives comprenant au moins un montant de transaction et au moins une donnée représentative d'une taxe à appliquer à chaque transaction. Le module de mémorisation transactionnel amovible comprend des moyens de protection de ladite information représentative, aptes à empêcher un effacement et/ou une modification des données mémorisées par ledit module de mémorisation transactionnel amovible.

Un tel terminal offre donc des moyens de lutter contre la fraude fiscale. 5.2 Présentation d'un mode de réalisation particulier de l'invention

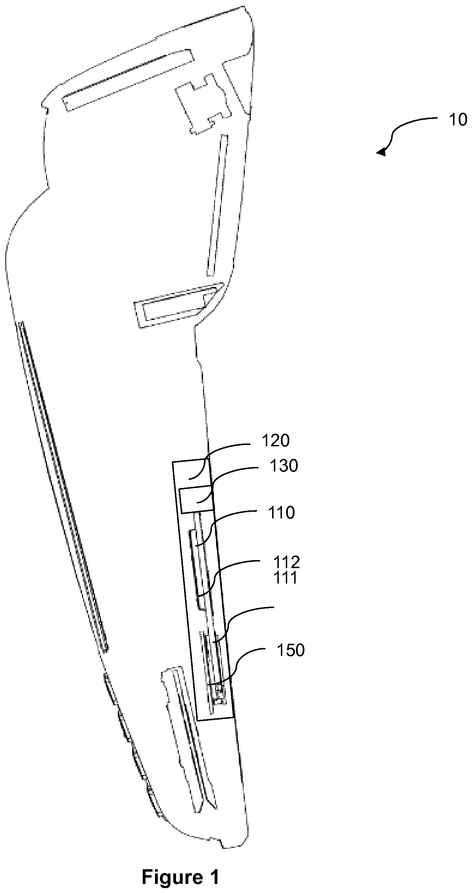

On présente en lien avec la figure 1 un mode de réalisation particulier d'un terminal de paiement selon l'invention.

Dans le mode de réalisation particulier illustré, le terminal 10 est comprend deux demi-coques, une demi-demi-coque supérieure et une demi-coque inférieure dans laquelle est aménagé un logement 120 pouvant être obstrué par l'intermédiaire d'une trappe. Le logement 120 est apte à recevoir des éléments du terminal et en particulier un module de mémorisation transactionnel 110, dans une position dite de fonctionnement.

La figure 1 représente une vue de profil du terminal 10, la trappe obstruant le logement 120 étant retirée, et le logement 120 étant ainsi accessible aux regards. Dans le mode de réalisation particulier illustré en figure 1, un module de mémorisation transactionnel 110 est installé dans une position de fonctionnement, définie par un emplacement du logement 120.

Selon l'invention, le logement 120 comprend également un connecteur 150, permettant de connecter un circuit imprimé du terminal 10 avec une plage de connexion que comprend le module de mémorisation transactionnel 110, et un dispositif de retenue 130 du module de mémorisation transactionnel 110 dans une position de fonctionnement. Le dispositif de retenue 130 comprend en particulier des moyens de maintien élastique du module de mémorisation transactionnel dans la position de fonctionnement.

D'autres éléments peuvent également être présents dans ce logement, notamment d'autres éléments extractibles du terminal, par exemple un rouleau de papier.

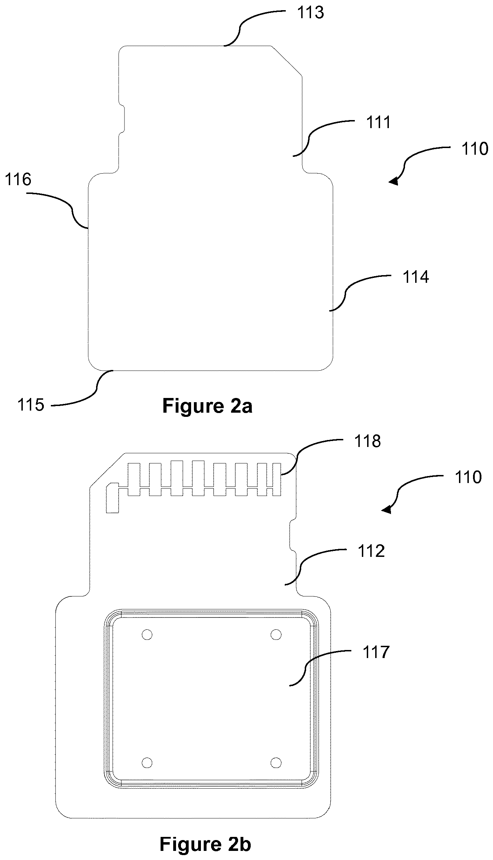

Les figures 2a et 2b présentent un module de mémorisation transactionnel 110 dans un mode de réalisation particulier, compatible avec le mode de réalisation d'un terminal de paiement illustré en figure 1. Comme représenté, le module de mémorisation transactionnel est de forme quasiment parallélépipédique. Il comprend ainsi deux faces principales :
- une face dite « antérieure » 111, illustrée en figure 2a, visible lorsque le module de mémorisation transactionnel est inséré dans une position de fonctionnement et que le logement est accessible (par exemple parce que la trappe est retirée, comme illustré en figure 1) ; et
- une face dite « postérieure » 112, illustrée en figure 2b, cachée au regard lorsque le module de mémorisation transactionnel est retenu dans la position de fonctionnement.

Le module de mémorisation transactionnel comprend également 4 faces latérales (113, 114, 115, 116), correspondant aux côtés, ou tranches, du module de mémorisation transactionnel.

La face postérieure peut en particulier comprendre un ou plusieurs processeurs ainsi qu'un ou plusieurs composants mémoires cachés par un capot 117.

Le module de mémorisation transactionnel comprend également au moins une plage de connexion 118, reliée au processeur et/ou composant mémoire.

Selon l'invention le module transactionnel est formé à partir d'un circuit imprimé, dont la taille est sensiblement identique à celle du module en lui-même. Ce circuit imprimé est utilisé pour disposer la plage de connexion d'une part et le processeur et/ou composant mémoire d'autre part. Dans un mode de réalisation spécifique de l'invention, la face antérieure 111 du module de mémorisation comprend un treillis de protection (non représenté), éventuellement enfoui sous une couche de substrat, afin qu'il ne soit pas détectable. La fonction de ce treillis est d'empêcher une altération, par la face antérieure, du module de mémorisation. Si une altération se produit, le module de mémorisation et/ou le terminal dans lequel il est inséré, sont aptes à détecter cette altération et à empêcher l'utilisation du terminal et/ou du module de mémorisation. Le treillis de protection permet de détecter une altération ou une tentative d'insertion durant le fonctionnement du module (c'est-à-dire lorsque la trappe est ouverte). L'objet d'une telle effraction peut par exemple être d'altérer la journalisation des données.

De même, le capot 117 peut comprendre des mesures de sécurisation, empêchant la mise en œuvre du module lorsque celui-ci est mis en fonction. Ces mesures peuvent être implémentées sous la forme d'un plan de masse qui recouvre l'ensemble du capot, et dont une altération conduirait à une différence de potentiel détectable. Les mesures de sécurisation du capot permettent de détecter une altération ou une tentative d'insertion préalable au fonctionnement du module (c'est-à-dire lorsque le module n'est pas dans le terminal). L'objet d'une telle effraction peut par exemple être d'altérer la journalisation des données.

Selon l'invention, le module de mémorisation transactionnel possède un format compatible avec celui d'au moins une carte mémoire de format particulier, notamment en terme de plage de connexion et/ou d'encombrement physique. Dans certains modes de réalisation, il peut s'agir d'une carte de format standard, afin de faciliter la lecture des données mémorisées depuis un autre terminal, par exemple un lecteur de cartes mémoire du marché. Dans le mode de réalisation illustré, le module de mémorisation transactionnel possède ainsi un format et/ou une plage de connexion similaire à celui d'une carte de type « SD Card » (pour « Secure Digital »).

### Installation du module

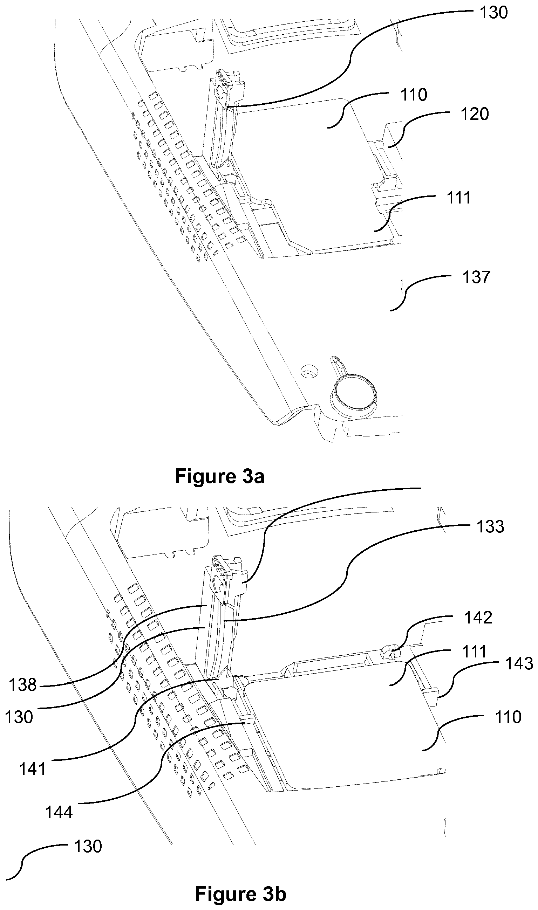

Selon l'invention, le module de mémorisation transactionnel 110 peut être inséré dans le terminal, par exemple par coulissement et/ou pivotement, dans une position de fonctionnement. Les figures 3a à 3c illustrent cette insertion.

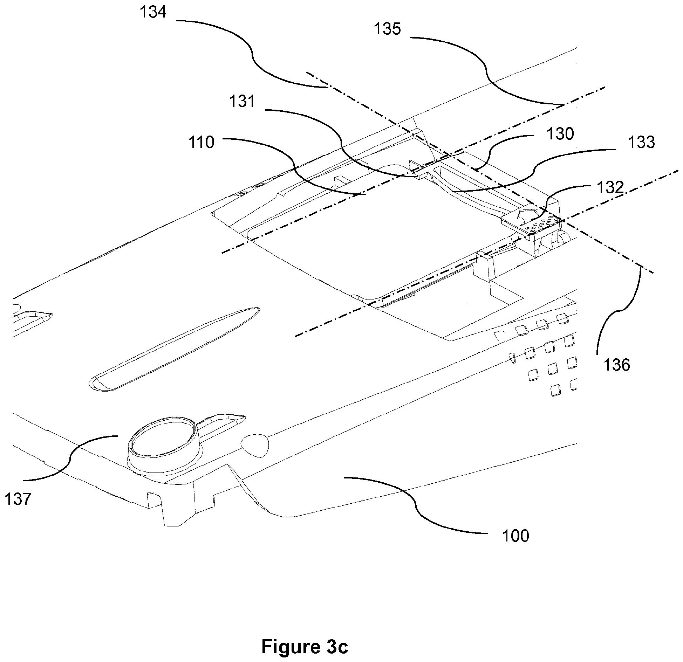

Dans le mode de réalisation particulier illustré dans les figures 3a, 3b et 3c, le module de mémorisation transactionnel 110 comprend par exemple un circuit imprimé non déformable et le logement 120 comprend un connecteur (non représenté), permettant d'établir une connexion entre un circuit imprimé du terminal, par exemple une carte mère du terminal et la plage de connexion du module de mémorisation transactionnel, et un dispositif de retenue 130, du module de mémorisation transactionnel 110 dans la position de fonctionnement.

Dans le mode de réalisation particulier illustré par les figures 3a à 3c, le module de mémorisation transactionnel 110 est tout d'abord disposé dans le logement 120, dans une position proche de la position de fonctionnement, par exemple dans un même plan horizontal (figure 3a) que celui de la position de fonctionnement, de façon à ce que pouvoir insérer la plage de connexion dans le connecteur 150, par coulissement du module de mémorisation transactionnel vers la position de fonctionnement (figure 3b). Le dispositif de retenue est inactif lors de l'insertion du module de mémorisation transactionnel.

Un tel dispositif de retenue 130 peut notamment comprendre des moyens élastiques 133, destinés à être positionnés au moins partiellement en contact avec au moins une partie de la face latérale 115 du module de mémorisation transactionnel 110, située en vis-à-vis du connecteur, après l'insertion du module de mémorisation transactionnel dans la position de fonctionnement (figure 3c), de façon à plaquer le module de mémorisation transactionnel contre le connecteur 150, ou tout au moins à conserver un contact entre le connecteur 150 et la plage de connexion 118 du module de mémorisation transactionnel amovible 110.

Plus précisément, dans le mode de réalisation illustré en figures 3a à 3c, le module de mémorisation transactionnel amovible 110 est intercalé entre le connecteur 150 et les moyens élastiques 133.

Dans le mode de réalisation illustré, le module de mémorisation transactionnel amovible est placé de façon sensiblement parallèle à la surface 137 de la coque inférieure 100 amenée à venir en contact, ou en quasi contact, avec une surface en vis-à-vis de la coque supérieure. Il est de plus situé en face de l'emplacement de la trappe donnant accès au logement 120. De ce fait, le module de mémorisation transactionnel amovible 110 est facilement accessible, par exemple lors de son extraction ou de son insertion.

Dans le mode de réalisation particulier présenté, le dispositif de retenue 130 comprend également des premières pattes de maintien (131,132). Les premières pattes de maintien (131, 132) visent à minimiser la force nécessaire aux moyens élastiques, pour conserver une connexion entre le connecteur 150 et la plage de connexion 118 du module de mémorisation transactionnel amovible 110, en évitant que le module de mémorisation transactionnel 110 ne puisse s'éloigner par pivotement de la position de fonctionnement.

Par exemple, dans le mode de réalisation illustré en figures 3a à 3c, les premières pattes de maintien (131, 132) permettent d'éviter que la face antérieure 111 du module de mémorisation transactionnel maintenue par le connecteur ne s'écarte du fond du logement 120, lorsque le terminal 10 est retourné, par exemple pour être disposé dans sa position d'utilisation, comme représenté en figure 1, sans sa trappe d'obstruction. En effet, un tel écartement pourrait en particulier induire un positionnement de biais du module de mémorisation transactionnel 110 et donc diminuer l'effet de retenue des moyens élastiques 133. Un tel écartement pourrait également être utilisé pour tenter d'altérer le fonctionnement du terminal en y introduisant des sondes sur des pistes de circuit imprimé pouvant être accessibles. Ainsi, l'une des vocations de ces éléments de guidage et de maintien est liée à la mise en œuvre d'une politique de sécurisation du terminal.

Les moyens élastiques 133 peuvent notamment prendre la forme d'un bourrelet élastique situé dans une rainure du dispositif de retenue 130 en vis-à-vis d'une face latérale 115 du module de mémorisation transactionnel quand il est installé dans la position de fonctionnement, ou d'une languette déformable, située entre les premières pattes de maintien (131, 132), notamment d'une languette déformable rejoignant au moins certaines des premières pattes de maintien, comme représenté en figures 3a à 3c.

Dans certains modes de réalisation de l'invention, le dispositif de retenue peut notamment être monté de façon à permettre de rendre temporairement inactifs les moyens de maintien élastique et donc à faciliter l'insertion du module de mémorisation transactionnel. Par exemple, le dispositif de retenue peut être monté pivotant autour d'un axe de rotation 134 représenté en figure 3c, parallèle à la face latérale à retenir du module de mémorisation transactionnel dans la position de fonctionnement, ou encore d'un axe de rotation (135, 136), représenté en figure 3c, perpendiculaire à la face latérale à retenir du module de mémorisation transactionnel dans la position de fonctionnement et passant au voisinage de l'un des côté du dispositif de retenue 130.

En particulier, dans le mode de réalisation particulier illustré dans les figures 3a à 3c, le dispositif de retenue 133 présenté comprend au moins une partie articulée 138, ou loquet de positionnement du module de mémorisation transactionnel, apte à pivoter autour d'un pivot 141, situé sur le côté du dispositif de retenue 133, selon un axe de rotation 135 perpendiculaire à la face latérale à retenir du module de mémorisation transactionnel dans la position de fonctionnement. Il peut également comprendre une autre partie, complémentaire à la partie mobile 138, montée de façon fixe dans le logement 120.

Le dispositif de retenue comprend en outre des moyens de maintien de la partie mobile 138 dans une position de fermeture. De tels moyens peuvent par exemple être formés par un ergot 142 que comporte la partie fixe et/ou le logement 120 et des moyens de clipsage 143, aptes à coopérer avec l'ergot 142, que comporte la partie mobile 138.

Dans le mode de réalisation particulier illustré, l'un des premières pattes de fixation 132 peut également être utilisée comme moyen de préhension de la partie mobile 138.

Selon un autre mode de réalisation particulier, éventuellement compatible avec le mode de réalisation précédent, le dispositif de retenue 130 peut également comprendre des secondes pattes de maintien (non représentées), en vis-à-vis des premières pattes de maintien (131, 132), un espace étant aménagé entre les premières et secondes pattes de maintien.

Lorsque un tel dispositif de retenue 130 est monté pivotant autour de l'axe de rotation 134 parallèle à la face latérale à retenir du module de mémorisation transactionnel dans la position de fonctionnement, un côté du module de mémorisation transactionnel peut par exemple être d'abord glissé dans le dispositif de retenue, dans l'espace aménagé entre les premières et secondes pattes de maintien. Le pivotement du dispositif de retenue permet ensuite l'installation du module de mémorisation transactionnel 110 dans la position de fonctionnement.

Dans une variante de réalisation, la trappe également peut comprendre des moyens élastiques, par exemple une languette ressort placée en vis-à-vis de l'emplacement du module de mémorisation transactionnel, visant à maintenir le module de mémorisation transactionnel écarté de la trappe et donc, en conséquence, (comme exposé en liaison avec les premières pattes de maintien 131, 132 présenté en figure 3) à plaquer le module de mémorisation transactionnel vers le fond du logement 120.

Dans d'autres modes de réalisation, éventuellement complémentaires, le terminal 10 peut comprendre également des moyens de maintien périphériques, sous forme d'ergots, de nervures ou de plots par exemple, situés à la périphérie de l'emplacement défini par la position de fonctionnement du module de mémorisation transactionnel 110 dans le terminal 10, de façon à être proches d'au moins un côté du module de mémorisation transactionnel dans sa position de fonctionnement, et à limiter les déplacements latéraux du module de mémorisation transactionnel dans au moins une direction latérale de déplacement. Ainsi, dans le mode de réalisation illustré, des ergots (143, 144) permettent de limiter les déplacements du module de mémorisation transactionnel dans un plan parallèle à l'emplacement occupé par le module de mémorisation transactionnel dans le logement.

Dans une variante, de tels moyens de maintien périphériques peuvent être situés dans la trappe elle-même, en vis-à-vis de la périphérie de l'emplacement défini par la position de fonctionnement. De tels modes de réalisation offrent l'avantage d'être parfois plus faciles à mettre en œuvre selon l'implantation des autres éléments qui occupent le logement dans lequel se situe le module de mémorisation transactionnel.

## Revendications

1. Terminal de paiement électronique (10), dont le boîtier comprend deux demi-coques, une demi-demi-coque supérieure et une demi-coque inférieure dans laquelle est aménagé un logement (120) pouvant être obstrué par l'intermédiaire d'une trappe, le logement comprenant:
- un connecteur (150), connectant un circuit imprimé dudit terminal avec au moins une plage de connexion d'un module de mémorisation transactionnel amovible, ledit connecteur et ladite plage de connexion comprenant des moyens de connexion selon un format standard ;
- un dispositif de retenue (130) dudit module de mémorisation transactionnel amovible dans une position de fonctionnement, ledit dispositif de retenue comprenant des moyens de maintien élastique dudit module de mémorisation transactionnel amovible dans ladite position de fonctionnement ;
ledit terminal comprenant en outre :
- des moyens de vérification de la présence dudit module de mémorisation transactionnel amovible, délivrant une information de présence ; ledit terminal étant **caractérisé en ce qu'**il comprend également :
- des moyens d'authentification dudit module de mémorisation transactionnel amovible, comprenant des moyens de lecture d'un numéro de série du module de mémorisation transactionnel amovible, contenu dans ledit module de mémorisation transactionnel amovible, et des moyens de vérification dudit numéro de série, délivrant une information d'authentification ;
- des moyens de blocage du fonctionnement dudit terminal, lesdits moyens de blocage prenant la forme d'un circuit de coupure empêchant le démarrage du terminal en cas d'information de présence et/ou d'authentification négative.

2. Terminal de paiement électronique selon la revendication 1 **caractérisé en ce que** ledit connecteur est conformé de sorte que ledit module de mémorisation transactionnel amovible se situe dans un plan sensiblement parallèle à une surface de la demi-coque inférieure.

3. Terminal de paiement électronique selon la revendication 1 ou 2 **caractérisé en ce qu'**au moins une partie dudit connecteur est positionnée de sorte qu'une portion non connectable dudit module de mémorisation transactionnel amovible soit sensiblement en vis-à-vis de ladite trappe, lorsque ledit module de mémorisation transactionnel amovible est retenu dans ladite position de fonctionnement.

4. Terminal de paiement selon l'une des revendications 1 à 3 **caractérisé en ce que** ledit terminal comprend en outre des ergots périphériques, formant des moyens de limitation d'un déplacement latéral du module de mémorisation transactionnel amovible, lorsque ledit module de mémorisation transactionnel amovible est retenu dans ladite position de fonctionnement, selon au moins une direction latérale de déplacement.

5. Terminal de paiement selon la revendication 4 **caractérisé en ce que** les ergots périphériques sont situés dans ledit logement, à la périphérie de ladite position de fonctionnement.

6. Terminal de paiement selon l'une des revendications 1 à 5 **caractérisé en ce que** ledit module de mémorisation transactionnel amovible comprend des moyens d'enregistrement d'au moins une information représentative d'au moins une transaction réalisée à l'aide dudit terminal, ladite information représentative comprenant au moins un montant de transaction et au moins une donnée représentative d'une taxe à appliquer à ladite transaction
et **en ce que** ledit module de mémorisation transactionnel amovible comprend des moyens de protection de ladite information représentative, aptes à empêcher un effacement et/ou une modification des données mémorisées par ledit module de mémorisation transactionnel amovible.

## Patentansprüche

1. Elektronisches Zahlungsterminal (10), dessen Gehäuse zwei Halbschalen aufweist, eine obere Halbschale und eine untere Halbschale, in der eine Aufnahme (120) ausgebildet ist, die mittels einer Klappe blockiert werden kann, wobei die Aufnahme aufweist:
- einen Steckverbinder (150), der eine gedruckte Schaltung des Terminals mit mindestens einer Anschlussfläche eines abnehmbaren transaktionalen Speichermoduls verbindet, wobei der Steckverbinder und die Anschlussfläche Anschlussmittel nach einem Standardformat aufweisen,
- eine Haltevorrichtung (130) des abnehmbaren transaktionalen Speichermoduls in einer Betriebsposition, wobei die Haltevorrichtung Mittel zum elastischen Halten des abnehmbaren transaktionalen Speichermoduls in der Betriebsposition aufweist,
wobei das Terminal ferner aufweist:
- Mittel zum Überprüfen des Vorhandenseins des abnehmbaren transaktionalen Speichermoduls, die eine Anwesenheitsinformation bereitstellen, wobei das Terminal **dadurch gekennzeichnet ist, dass** es auch aufweist:
- Mittel zum Authentifizieren des abnehmbaren transaktionalen Speichermoduls, umfassend Mittel zum Lesen einer Seriennummer des abnehmbaren transaktionalen Speichermoduls, die in dem abnehmbaren transaktionalen Speichermodul enthalten ist, und Mittel zum Überprüfen der Seriennummer, die eine Authentifizierungsinformation bereitstellen,
- Mittel zum Blockieren des Betriebs des Terminals, wobei die Mittel zum Blockieren die Form einer Unterbrechungsschaltung annehmen, die das Starten des Terminals bei nicht bereitgestellter Anwesenheitsinformation und/oder nicht erfolgter Authentifizierung verhindert.

2. Elektronisches Zahlungsterminal nach Anspruch 1, **dadurch gekennzeichnet, dass** der Steckverbinder derart ausgestaltet ist, dass sich das abnehmbare transaktionale Speichermodul in einer Ebene befindet, die im Wesentlichen parallel zu einer Fläche der unteren Halbschale ist.

3. Elektronisches Zahlungsterminal nach Anspruch 1 oder 2, **dadurch gekennzeichnet, dass** mindestens ein Teil des Steckverbinders derart angeordnet ist, dass ein nicht anschließbarer Abschnitt des abnehmbaren transaktionalen Speichermoduls im Wesentlichen gegenüberliegend von der Klappe ist, wenn das abnehmbare transaktionale Speichermodul in der Betriebsposition gehalten wird.

4. Zahlungsterminal nach einem der Ansprüche 1 bis 3, **dadurch gekennzeichnet, dass** das Terminal ferner Umfangsvorsprünge aufweist, die Begrenzungsmittel einer seitlichen Bewegung des abnehmbaren transaktionalen Speichermoduls in mindestens einer seitlichen Bewegungsrichtung bilden, wenn das abnehmbare transaktionale Speichermodul in der Betriebsposition gehalten wird.

5. Zahlungsterminal nach Anspruch 4, **dadurch gekennzeichnet**, die Umfangsvorsprünge in der Aufnahme am Rand der Betriebsposition angeordnet sind.

6. Zahlungsterminal nach einem der Ansprüche 1 bis 5, **dadurch gekennzeichnet, dass** das abnehmbare transaktionale Speichermodul Mittel zum Aufzeichnen von mindestens einer Information aufweist, die für mindestens eine Transaktion repräsentativ ist, die mit Hilfe der Terminals durchgeführt wird, wobei die repräsentative Information mindestens einen Transaktionsbetrag und mindestens eine Dateneinheit aufweist, die für eine Steuer repräsentativ ist, die auf die Transaktion anzuwenden ist,
und dadurch, dass das abnehmbare transaktionale Speichermodul Mittel zum Schützen der repräsentativen Information aufweist, die geeignet sind, ein Löschen und/oder ein Ändern der gespeicherten Daten durch das abnehmbare transaktionale Speichermodul zu verhindern.

## Claims

1. Electronic payment terminal (10), whose casing comprises two half-shells, an upper half-shell and a lower half-shell in which a housing (120) is arranged which can be blocked by means of a trapdoor, wherein the housing comprises:
- a connector (150), connecting a printed circuit board of said terminal with at least one connection pad of a removable transactional memory module, said connector and said connection pad comprising connection means according to a standard format;
- a device (130) for retaining said removable transactional memory module in an operating position, said retaining device comprising means for resiliently holding said removable transactional memory module in said operating position;
said terminal further comprising:
- means for the verification of the presence of said removable transactional memory module, providing an item of presence information; said terminal being **characterised in that** it also comprises:
- means for the authentication of said removable transactional memory module, comprising means for reading a serial number of the removable transactional memory module contained in said removable transactional memory module, and verification means for said serial number, providing an item of authentication information;
- means for blocking the operation of said terminal, said blocking means taking the form of a cut-off circuit preventing the terminal from starting in the event of negative presence and/or authentication information.

2. Electronic payment terminal according to claim 1, **characterised in that** said connector is configured such that said removable transactional memory module lies in a plane substantially parallel to a surface of the lower half-shell.

3. Electronic payment terminal according to claim 1 or 2, **characterised in that** at least a part of said connector is positioned such that a non-connectable portion of said removable transactional memory module substantially faces said hatch, when said removable transactional memory module is retained in said operating position.

4. Payment terminal according to one of claims 1 to 3, **characterised in that** said terminal further comprises peripheral lugs, forming means for limiting a lateral displacement of the removable transactional memory module, when said removable transactional memory module is retained in said operating position, along at least one lateral direction of displacement.

5. Payment terminal according to claim 4, **characterised in that** the peripheral lugs are located in said housing at the periphery of said operating position.

6. Payment terminal according to one of claims 1 to 5, **characterised in that** said removable transactional memory module comprises means for the recording of at least one item of information representative of at least one transaction carried out using said terminal, said representative information comprising at least one transaction amount and at least one data item representative of a fee to be applied to said transaction, and **in that** said removable transactional memory module comprises means for the protection of said representative information, capable of preventing an erasure and/or a modification of the data stored by said removable transactional memory module.
